# EUROPÄISCHE PATENTANMELDUNG

(11) **EP 0 611 595 A1**
(43) Veröffentlichungstag der Anmeldung: **24.08.1994**
(21) Anmeldenummer: 94100856.7
(22) Anmeldetag: 21.01.1994
(51) Int. Cl.: B01J 39/04, B01J 47/04, C02F 1/42

(54) **Verfahren zum Entsalzen von Wasser**

(30) Priorität: 16.02.1993 DE 4304666
(71) Anmelder: Brita Wasser-Filter-Systeme GmbH, D-65232 Taunusstein-Neuhof (DE)
(72) Erfinder: Belz, Rolf, D-65328 Hohenstein 1- Breithardt (DE); Conradt, Berthold, D-65205 Wiesbaden (DE)
(74) Vertreter: Weber, Dieter, Dr.

(57) **Zusammenfassung**

Die vorliegende Erfindung betrifft ein Verfahren zum wenigstens teilweisen Entsalzen von Wasser unter Behandlung des Wassers mit einem schwach sauren Kationenaustauscher in der Wasserstofform. Um Wasser mit einer möglichst geringen Ionenaustsuschermenge möglichst weitgehend zu entsalzen und um insbesondere das Wasser nicht zur zu enthärten, sondern auch Nitrat aus ihm zu entfernen, wird erfindungsgemäß vorgeschlagen, daß man das Wasser vor oder gleichzeitig mit der Behandlung mit dem schwach sauren Kationenaustauscher mit einem stark basischen Anionenaustauscher in der Hydroxyl- oder Hydrogencarbonat-Form behandelt.

## Beschreibung

Es ist bekannt, Wasser für gewerbliche Verwendung oder Verwendung im Haushalt durch Hindurchleiten des Wassers durch ein Ionenaustauscherbett von schwach saurem Kationenaustauscher in der Wasserstofform zu enthärten. Bei diesem Verfahren wird die Carbonathärte aus dem Wasser entfernt, indem die an Hydrogencarbonat gebundenen Kationen, insbesondere Calcium- und Magnesiumionen, gegen Wasserstoffionen ausgetauscht werden und die dabei gebildete Kohlensäure sich in Form von CO₂ verflüchtigt. An andere Anionen gebundene Kationen, wie an Sulfat oder Nitrat gebundene Kationen, werden dabei nicht ausgetauscht.

Auch ist es bekannt, durch Behandlung des Wassers mit Ionenaustauscher-Mischbetten oder mit aufeinanderfolgenden Schichten unterschiedlicher Ionenaustauscher dem Wasser sowohl Anionen als auch Kationen zu entziehen. Derartige Verfahren beginnen im Regelfall mit einer Schicht eines stark sauren Kationenaustauschers, um die Kationen möglichst vollständig auszutauschen. Derartige Entsalzungsverfahren benötigen große Menen an Ionenaustauscher, der unterschiedlich schnell erschöpft wird, wobei nach Erschöpfen einer der Schichten der gesamte Ionenaustauscher ersetzt werden muß.

Sowohl bei gewerblicher Verwendung als auch im Haushalt ist es vielfach erwünscht, das Leitungswasser wenigstens teilweise zu entsalzen, beispielsweise für die Zubereitung von Babynahrung, bei der wichtige Spurenelemente, wie beispielsweise Zink, mit normalem Leitungswasser oder auch mit enthärtetem Leitungswasser ausgefällt und somit der Aufnahme durch den Magen-Darmkanal des Babys entzogen werden können. Insbesondere ist es auch vielfach erwünscht, im Haushalt verwendetem Leitungswasser, das für die Nahrungsmittelzubereitung verwendet wird, Nitrat zu entziehen, was mit Hilfe üblicher Enthärtungsfilter nicht möglich ist.

Bei solchen Anwendungzwecken ist es unerwünscht, große Mengen an Ionenaustauscher benutzen zu müssen, da im Haushalt keine langen Austauschersäulen aufgestellt werden können und eine Mobilität der Behandlungsvorrichtungen etwa in Form von Filtertrichtem erwünscht ist.

Die der Erfindung zugrundeliegende Aufgabe bestand somit darin, Wasser mit einer möglichst geringen Ionenaustauschermenge möglichst weitgehend zu entsalzen. Insbesondere ist es erwünscht, das Wasser nicht zur zu enthärten, sondem auch Nitrat aus ihm zu entfernen.

Erfindungsgemäß wird diese Aufgabe mit einem Verfahren zum wenigstens teilweisen Entsalzen von Wasser unter Behandlung des Wassers mit einem schwach sauren Kationenaustauscher in der Wasserstofform dadurch gelöst, daß man das Wasser vor oder gleichzeitig mit der Behandlung mit dem schwach sauren Kationenaustauscher mit einem stark basischen Anionenaustauscher in der Hydroxyl- oder Hydrogencarbonatform behandelt.

Bei dieser Methode werden mit Hilfe des stark basischen Anionenaustauschers Anionen, wie Nitrationen, Chloridionen oder Sulfationen, gegen Hydrogencarbonationen oder Hydroxylionen ausgetauscht, so daß dann anschließend der schwach saure Kationenaustauscher in der Wasserstofform in der Lage ist, alle Erdalkalikationen und einen Teil der Alkalikationen auszutauschen, also auch solche, die ursprünglich beispielsweise an Sulfat gebunden waren.

Der stark basische Anionenaustauscher wird an sich schneller erschöpft als der schwach saure Kationenaustauscher, doch enthält Trinkwasser gewöhnlich sehr viel weniger Nitrat-, Chlorid- und Sulfatanionen als austauschbare Kationen, wie Calcium und Magnesium, so daß die Ionenaustauschermengen in einem Mischbett oder in zwei aufeinanderfolgenden Schichten beispielsweise für übliches Trinkwasser so zugeschnitten werden können, daß beide Ionenaustauscher weitgehend gleichzeitig erschöpft sind.

Bevorzugt wird der stark basische Anionenaustauscher in der HCO₃⁻-Form verwendet, was für die Behandlung von Wasser äußerst ungewöhnlich ist, da man bisher immer durch Ionenaustauscherbehandlung die Hydrogencarbonationen aus dem Wasser entfernte, während beim vorliegenden Verfahren das behandelte Wasser zunächst mit Hydrogencarbonationen angereichert wird, indem die übrigen enthaltenen Ionen, wie Nitrationen, Chloridionen und Sulfationen, gegen Hydrogencarbonationen ausgetauscht werden.

Da nach der bevorzugten Aufgabenstellung der vorliegenden Erfindung dem Wasser Nitrationen entzogen werden sollen, ist es besonders bevorzugt, an sich bekannte nitratselektive stark basische Anionenaustauscher zu verwenden, die Nitrationen bevorzugt vor Sulfationen austauschen und so dem behandelten Wasser entziehen. Eine bevorzugte Gruppe von nitratselektiven Ionenaustauschern ist jene auf Styrolharzbasis mit Triethylamingruppen als Substituenten an den Styrolringen.

Als schwach saure Kationenaustauscher in der Wasserstofform können beispielsweise solche auf Acrylharzbasis mit Carboxylgruppen verwendet werden.

Obwohl das vorliegende Verfahren mit Mischbetten beider Ionenaustauschertypen durchführbar ist, ist es bevorzugt, die beiden Ionenaustauschertypen in getrennten Filterbetten zu halten und gegebenenfalls durch ein wasserdurchlässiges Bauteil voneinander zu trennen, dessen Poren so bemessen sind, daß die Ionenaustauscherteilchen in der jeweiligen Filterschicht zurückgehalten werden. Bei dieser Ausführungsform des Verfahrens wird also das zu behandelnde Wasser zunächst durch ein Bett des stark basischen Anionenaustauschers und anschließend durch ein Bett des schwach sauren Kationenaustauschers geschickt.

Die in der Wasserbehandlung ungewöhnliche Aufeinanderfolge zweier spezieller Ionenaustauschertypen löst die gestellte Aufgabe, eine möglicht weitgehende Entsalzung mit möglichst wenig Ionenaustauscher und damit einer handlichen Austauschervorrichtung zu beseitigen und vorzugsweise Nitrat aus Trinkwasser zu entfernen.

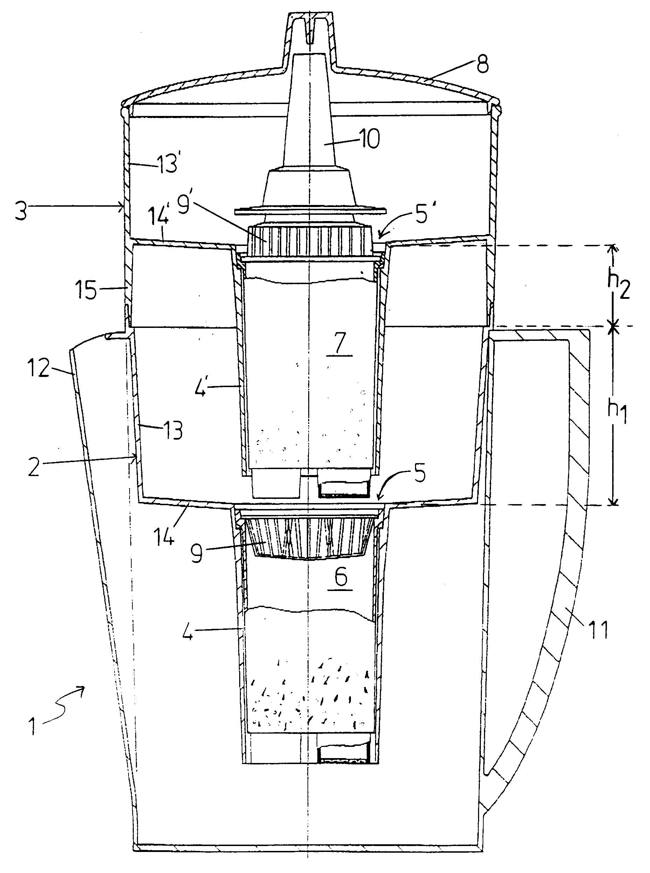

In der beigefügten Zeichnung ist beispielhalber eine Vorrichtung zur Durchführung des erfindungsgemäßen Verfahrens dargestellt.

Die einzige Figur zeigt eine erfindungsgemäße Vorrichtung mit eingesetzten Patronen im Längsschnitt.

In der Figur erkennt man einen Auffangbehälter 1 für gefiltertes Wasser, der einen Handgriff 11 und eine Ausgußtülle 12 aufweist. Auf den oberen Rand des Behälters 1 ist ein Aufsatz 2 mit einem mehr oder weniger trichterförmigen Oberteil, das aus einer leicht konischen und nahezu zylindrischen Wand 13 und einem relativ flach zu einer Aufnahmeöffnung 5 hin geneigten Boden 14 besteht, aufgesetzt. Um die Aufnahmeöffnung 5 herum erstreckt sich von der Unterseite des Bodens aus nach unten ein schwach konischer, nahezu zylindrischer Ansatz 4, in welchen eine Patrone 6 passend einsetzbar ist. Die Patrone 6, der Rand der Aufnahmeöffnung 5 und der Ansatz 4 sind so gestaltet, daß die Patrone mit gutem Sitz und dicht darin aufgenommen ist, so daß das Wasser aus dem oberen Teil des Aufsatzes 2 ausschließlich durch die Patrone selbst hindurchfließt, um in den Behälter 1 zu gelangen. In der Patrone 6 ist ein schwach saurer Kationenaustauscher in der Wasserstofform enthalten.

Auf dem Aufsatz 2 befindet sich ein weiterer Aufsatz 3, der weitgehend ähnlich aufgebaut ist wie der Aufsatz 2. Insbesondere weist auch der Aufsatz 3 ein mehr oder weniger trichterförmiges bzw. als Trichter dienendes oberes Teil auf, das aus einer zylindrischen Wand 13' und einem zu einer Bodenöffnung 5' hin schwach geneigten Boden 14' besteht. Auch um den Rand der Bodenöffnung 5' die zur Aufnahme einer Patrone 7 dient, erstreckt sich nach unten ein leicht konischer Ansatz 4', in welchem die Patrone 7 mit gutem Sitz und mindestens an ihrem oberen Rand abgedichtet aufgenommen ist. Die Patrone 7 enthält einen stark basischen Anionenaustauscher in der Hydrogencarbonatform.

Ein Unterschied zu dem Aufsatz 2 besteht darin, daß die Wand 13' des Trichterteiles des Aufsatzes 3 im wesentlichen zylindrisch ausgebildet ist, während die Wand 13 des Aufsatzes 2 leicht konisch ausgebildet ist, weil sie in den Behälter 1 eingesetzt ist und lediglich mit ihrem abgestuften oberen Rand auf dem Rand des Behälters 1 aufliegt. Außerdem erstreckt sich ein ebenfalls zylindrischer Wandteil 15 in Fortsetzung der zylindrischen Wand 13' vom Boden 14' des oberen Aufsatzes 3 weiter nach unten, und der obere Aufsatz 3 ist dementsprechend nur mit dem unteren Rand der verlängerten Wand 15 auf den oberen Rand des unteren Aufsatzes 2 aufgesetzt. Der obere Rand des Aufsatzes 2 und der untere Rand des Aufsatzes 3 bzw. der verlängerten Wand 15 des Aufsatzes 3 sind dabei abgestuft so gestaltet, daß sie an ihrer Außenseite und auch innen bündig ineinander übergehen. Die zylindrische Wandverlängerung 15 an der Unterseite des Aufsatzes 3 dient in erster Linie dazu, oberhalb des Bodens 14 und der in die Aufnahmeöffnung 5 eingesetzten Patrone 6 des Aufsatzes 2 genügend Platz für die sich vom Boden 14' des oberen Aufsatzes nach unten erstreckende Patrone 7 und auch für den die Patrone 7 aufnehmenden Ansatz 4' bereitzustellen. Die lichte Höhe h₁ des Trichterteiles des unteren Aufsatzes 2 würde nämlich hierfür nicht ausreichen. Die lichte Höhe h₂ der zylindrischen Wand 15 ist aber so bemessen, daß der gesamte lichte Abstand h₁ + h₂ vom oberen Rand der unteren Bodenöffnung 5 bis zum unteren Rand des oberen Bodens 14' gerade ausreicht, um den Ansatz 4' und die Patrone 7 in dem dadurch gebildeten Raum aufzunehmen, wenn der Aufsatz 3 auf den Aufsatz 2 passend aufgesetzt ist. Man erkennt jedoch, daß das untere Ende der Patrone 7 sehr dicht über dem Rand der Bodenöffnung 5 des unteren Aufsatzes endet, so daß eine Patrone, die nennenswert über diesen Rand der Bodenöffnung 5 nach oben hervorstehen würde, das passende Aufsetzen des Aufsatzes 3 auf den Rand des unteren Aufsatzes 2 oder aber das passende Einsetzen der Patrone 7 in die Aufnahmeöffnung 5' bzw. den Ansatz 4' verhindern würde. Dies gilt insbesondere, wenn man beispielsweise die Patronen 6 und 7 vertauschen würde. Auf diese Weise wird sichergestellt, daß das in den Aufnahmetrichter des Aufsatzes 3 einzugießende Wasser immer zuerst die Patrone 7 und anschließend die Patrone 6 durchfließt. Auch die beiden Aufsätze 2 und 3 können nicht vertauscht werden, da der Aufsatz 2 mit seiner leicht konischen Wand 13 in den Aufnahmetrichter des oberen Aufsatzes 3 hineinrutschen würde und außerdem auch die lichte Höhe der Wand 13' des oberen Aufsatzes nicht ausreichen würde, um in dem oberen Trichterteil eine der Patronen 6 oder 7 aufzunehmen wenn der Aufsatz 2 noch auf den Aufsatz 3 aufgwesetzt werden sollte.

Wahlweise kann am Übergang der zylindrischen Wand 15 zu dee Wand 13 des unteren Aufsatzes 2 eine Sicherung oder eine Art Bajonettverschluß vorgesehen werden, damit für den Normalbetrieb die beiden Aufsätze 2 und 3 immer als Einheit zusammenbleiben, so daß nach Abnahme des Deckels 8 das zu filternde Wasser immer nur in den oberen Trichter des Aufsatzes 3 eingegossen wird.

Die Patrone 7 weist einen nach oben vorspringenden Siebdeckel 9' auf, der außerdem noch einen Griffaufsatz 10, der unter anderem auch als Entlüftungsrohr dient und der auch eine Markierung aufweist, um den Zeitpunkt des Einsetzens der Patrone durch entsprechendes Einstellen des Griffaufsatzes 10 ablesen zu können.

Die untere Patrone 6 weist ebenfalls einen Siebdeckel 9 auf, der dem Siebdeckel 9' weitgehend ähnlich ist und auch mit diesem identisch sein kann, jedoch genau umgekehrt auf den oberen Rand der Patrone auf- bzw. In die Patrone 6 eingesetzt ist. Dadurch ist sichergestellt, daß die Patrone 6 nicht über den Rand der Bodenöffnung 5 hinausragt, wenn sie passend in den Ansatz 4 bzw. In die Bodenöffnung 5 eingesetzt worden ist. Dabei kann es zweckmäßig sei, wenn der Siebdeckel 9 etwas abweichend von dem Siebdeckei 9' derart gestaltet wird, daß sich vom zentralen Bereich des Siebdeckels 9 aus noch ein Griffansatz nach oben und zur Patronenaußenseite hin erstreckt, so daß die Patrone an diesem Griffansatz erfaßt und aus dem Ansatz 4 bzw. der Ausnahmeöffnung 5 herausgezogen werden kann, wenn sie durch eine neue Patrone ersetzt werden soll. Auch dieser Griffansatz ist jedoch so bemessen, daß er nicht über den Rand der Bodenöffnung 5 hinausragt.

Mit Ausnahme der Siebdeckel 9 und 9' bzw. 10 können die Patronen 6 und 7 eine identische äußere Form haben. Durch das Umdrehen des Siebdeckels 9 im Vergleich zum Siebdeckel 9' ist dann jedoch das Volumen der Patrone 6 etwas geringer als das Volumen der Patrone 7. Dies ist jedoch kein Nachteil, wenn man berücksichtigt, daß für die Patrone 7 eine Füllung mit einem stark basischen Anionenaustauscher vorgesehen ist, der im allgemeinen schneller erschöpft ist als der schwach saure Kationenaustauscher, der als Füllung für die Patrone 6 vorgesehen ist.

Wenn auch in der Zeichnung nicht exakt dargestellt, so sollte jedoch in der bevorzugten Ausführungsform der Erfindung der obere Rand des Aufsatzes 3 den gleichen Innendurchmesser haben wie der obere Rand des unteren Aufsatzes 2, so daß der Deckel 8 in gleicher Weise auch auf den unteren Aufsatz 2 passend aufgesetzt werden kann. Der Filter kann dann ebenso wie die bereits bekannten üblichen Haushaltsfilter mit einer Patrone und einem Aufsatz 2 verwendet werden. Dabei darf auch die Patrone 6 verwendet werden, die einen schwach sauren Kationenaustauscher enthält und damit zumindest eine Enthärtung des Trinkwassers bewirkt, wenn auch andere Salze wie Chloride, Nitrate und Sulfate in dem Wasser verbleiben. Ansonsten kann jedoch die Patrone 6 auch durch die üblichen, bereits seit langem im Handel befindlichen Filterpatronen ersetzt werden.

## Patentansprüche

1. Verfahren zum wenigstens teilweisen Entsalzen von Wasser unter Behandlung des Wassers mit einem schwach sauren Kationenaustauscher in der Wasserstofform, **dadurch gekennzeichnet**, daß man das Wasser vor oder gleichzeitig mit der Behandlung mit dem schwach sauren Kationenaustauscher mit einem stark basischen Anionenaustauscher in der Hydroxyl- oder Hydrogencarbonat-Form behandelt.

2. Verfahren nach Anspruch 1, **dadurch gekennzeichnet**, daß man den stark basischen Anionenaustauscher in der HCO₃⁻-Form verwendet.

3. Verfahren nach Anspruch 1 oder 2, **dadurch gekennzeichnet**, daß man einen nitratselektiven, stark basischen Anionenaustauscher in der Hydroxyl- oder Hydrogencarbonat-Form verwendet.

4. Verfahren nach einem der Ansprüche 1 bis 3, **dadurch gekennzeichnet**, daß man einen stark basischen Anionenaustauscher auf Styrolharzbasis mit Triethylaminogruppen als Substituenten der Styrolringe in der Hydroxyl- oder Hydrogencarbonat-Form verwendet,

5. Verfahren nach einem der Ansprüche 1 bis 4, **dadurch gekennzeichnet**, daß man das Wasser mit voneinander getrennten Ionenaustauscherschichten behandelt und zunächst durch eine Schicht des schwach sauren Kationenaustauschers in der Wasserstofform und anschließend durch eine Schicht des stark basischen Anionenaustauschers in der Hydroxyl- oder Hydrogencarbonat-Form führt.

6. Verfahren nach einem der Ansprüche 1 bis 5, **dadurch gekennzeichnet**, daß man als schwach sauren Kationenaustauscher einen solchen auf Acrylharzbasis mit Carboxylgruppen in der Wasserstofform verwendet.
